Europäisches Patentamt

European Patent Office

Office européen des brevets

(19)

(11) Veröffentlichungsnummer: **0 259 849 B1**

(12) **EUROPÄISCHE PATENTSCHRIFT**

(45) Veröffentlichungstag der Patentschrift: **16.10.91**

(51) Int. Cl.5: **C09B 3/30**

(21) Anmeldenummer: **87113160.3**

(22) Anmeldetag: **09.09.87**

(54) Verfahren zur Herstellung von C.I. Vat Blue 16.

(30) Priorität: **12.09.86 DE 3631072**

(43) Veröffentlichungstag der Anmeldung:
**16.03.88 Patentblatt 88/11**

(45) Bekanntmachung des Hinweises auf die
Patenterteilung:
**16.10.91 Patentblatt 91/42**

(84) Benannte Vertragsstaaten:
**CH DE FR GB LI**

(56) Entgegenhaltungen:
**DE-B- 1 128 938
US-A- 3 036 095**

(73) Patentinhaber: **BASF Aktiengesellschaft
Carl-Bosch-Strasse 38
W-6700 Ludwigshafen(DE)**

(72) Erfinder: **Helwig, Reinhard, Dr.
Theodor-Storm-Strasse 27
W-6718 Gruenstadt(DE)**
Erfinder: **Hoch, Helmut, Dr.
Waldstrasse 61
W-6706 Wachenheim(DE)**

**Beschreibung**

C.I. Vat Blue 16, C.I. No. 71200, ist ein seit langem bekannter Marineblau-Farbstoff, der nach verschiedenen Verfahren hergestellt werden kann. Als Stand der Technik seien z.B. genannt: Die Umsetzung von 16,17-Dihydroxiviolanthrendion-5,10, auch als Dioxidibenzanthron bezeichnet, mit Glykolditoluolsulfonsäureester oder Toluolsulfonsäure-2-chlorethylester in Gegenwart von Alkalisalzen schwacher Säuren in Trichlorbenzol (DE-PS 451 122 und 456 582); die Umsetzung von Dioxidibenzanthron mit Ethylenbromid in Gegenwart von Alkalisalzen schwacher Säuren in Nitrobenzol (US-PS 1 761 624, 1 950 366 und 3 036 095) oder in Trichlorbenzol (J. Soc. Chem. Ind. Japan 46, 1256-8 (1943) ref. in C.A. 42, 6119 b); die Umsetzung von Dioxidibenzanthronkaliumsalz mit Di-($\beta$-chlorethyl)sulfat in Gegenwart von Pottasche in Nitrobenzol (US-PS 2 140 455) und die Umsetzung von Dioxidibenzanthron mit Ethylen-chlorid oder -bromid in Gegenwart eines Alkalisalzes einer schwachen Säure in einem dipolar aprotischen Lösungsmittel (DE-OS 28 30 881).

Diese und ähnliche Verfahren sind vom ökologischen Standpunkt her nachteilig. Sie erfordern entweder den Umgang mit halogenaromatischen Kohlenwasserstoffen wie Di- oder Trichlorbenzol, die sich aus dem Produkt, dem Waschwasser und der Abluft schlecht abtrennen lassen und biologisch schwer abgebaut werden, oder sie arbeiten mit dem biologisch besser abbaubaren, jedoch gesundheitsschädlichen Nitrobenzol als Lösungsmittel. Letzteres hat noch den Nachteil, daß die gewünschte Umsetzung nur schwierig vollständig zu erreichen ist.

Das in der DE-OS 28 30 881 beschriebene Verfahren vermeidet diese Probleme durch Verwendung eines dipolar aprotischen Lösungsmittels, welches aber nach dem Aufarbeiten des Reaktionsgemisches in Form eines Gemisches mit Wasser anfällt. Die dipolar aprotischen Lösungsmittel lassen sich aus diesem Gemisch nicht oder nur mit großem Aufwand und dann auch nur sehr unvollständig regenerieren. Weitere Nachteile dieses Verfahrens sind die im Vergleich zum Stand der Technik etwas geringere Ausbeute an Farbstoff und der relativ hohe Preis der verwendeten dipolar aprotischen Lösungsmittel.

Aufgabe der vorliegenden Erfindung war es, ein Verfahren zur Herstellung von C.I. Vat Blue 16, C.I. No. 71200, bereitzustellen, welches die ökologischen Nachteile der oben genannten Verfahren nicht aufweist. Gegenstand der Erfindung ist ein Verfahren zur Herstellung von C.I. Vat Blue 16; C.I No 71200 durch Alkylierung von 16,17-Dihydroxiviolanthrendion-5,10 in einem polaren Lösungsmittel in der Wärme, das dadurch gekennzeichnet ist, daß die Alkylierung in einem tertiären aliphatischen oder cycloaliphatischen Amin oder einem N-Alkylpiperidin als Lösungsmittel bei Temperaturen zwischen 100 und 230˚ C erfolgt.

Das erfindungsgemäße Verfahren vermeidet die oben genannten Nachteile durch die Verwendung biologisch gut abbaubarer, gut regenerierbarer und leicht aus der Abluft auswaschbarer Flüssigkeiten als Lösungsmittel, in denen die gewünschte Umsetzung schnell und vollständig abläuft. Derartige Lösungsmittel auf der Basis tertiärer aliphatischer oder cycloaliphatischer Amine haben des weiteren den Vorteil, daß sie den bei den Verfahren des Standes der erforderlichen Technik Zusatz von Reduktionsmitteln wie Dimethylanilin überflüssig machen. Darüber hinaus machen sie durch ihre basischen Eigenschaften den hohen Ballast an basischwirkenden Alkalisalzen überflüssig oder verringern ihn drastisch. Solche Alkalisalze sind für die Umsetzung nicht notwendig, müssen jedoch in begrenztem Umfang zugegeben werden, wenn das als Lösungsmittel verwendete Amin möglichst vollständig zurückgewonnen werden soll. Hierzu können die basisch wirkenden Alkalimetallsalze vor oder nach der Alkylierung zugegeben werden. Weitere Vorteile des erfindungsgemäßen Verfahrens sind schließlich die gegenüber dem Stand der Technik um 5 bis 10 % höhere Ausbeute an Farbstoff sowie seine hohe Reinheit.

Als tertiäre Amine kommen beim vorliegenden Verfahren solche in Betracht, die in Wasser schwer löslich sind.

Bevorzugt sind solche tert. Amine, deren Siedepunkt bei der zur Alkylierung erforderlichen Umsetzungstemperatur oder darüber liegt.

Als aliphatische tertiäre Amine sind für erfindungsgemäße Verfahren solche mit mindestens einem $C_3$- bis $C_{10}$-Alkylrest und insgesamt mindestens 9 C-Atomen geeignet und im einzelnen z.B. zu nennen: Tri-n-propylamin, Triisopropylamin, N,N-Dimethyl-2-ethylhexylamin, Tri-n-butylamin, Triisobutylamin, N,N-Dimethyl-n-decylamin, N,N-Dimethyl-n-dodecylamin, Tri-n-pentylamin, Triisopentylamin, Tri-3-methylbutylamin, Bis(2-ethylhexyl)-methylamin, Tri-n-hexylamin, Bis(2-ethylhexyl)-butylamin, Bis(2-ethylhexyl)-isobutylamin, Tri-n-heptylamin, Tri-n-octylamin und Tri-2-ethylhexylamin.

Als tertiäre cycloaliphatische Amine kommen vor allem solche des N,N-$C_1$- bis $C_4$-Dialkylcyclohexylamins und des N-$C_1$- bis $C_4$-Alkyldicyclohexylamins in Betracht z.B. Cyclohexyldimethylamin, Cyclohexyldiethylamin, Methyl-dicyclohexylamin und Ethyldicyclohexylamin. Außerdem sind N-$C_1$- bis $C_8$-Alkylpiperidine wie N-Pentylpiperidin, N-Hexylpiperidin, geeignet.

Bevorzugt sind Amine mit n-Alkylresten. Von den genannten Aminen ist Tri-n-butylamin als Lösungsmittel besonders hervorzuheben.

Die Menge an dem als Lösungsmittel dienenden tertiären Amin wird so bemessen, daß das Gemisch vor, während und nach der Alkylierung gut durchmischbar ist. Im allgemeinen wendet man je Gewichtsteil 16,17-Dihydroxiviolanthrendion-5,10(I) 2,5 bis 10 Gewichtsteile, vorzugsweise 2,6 bis 7, insbesondere 3 bis 5 Gewichtsteile des tertiären Amins an. Die Alkylierung kann auch in einem Überschuß von mehr als der 10fachen Gewichtsmenge an tertiärem Amin, bezogen auf (I), erfolgen. Dies bringt jedoch für die Alkylierung von (I) keinen Vorteil.

Als Alkylierungsmittel kommen die bei den Verfahren des Standes der Technik verwendeten in Betracht, z.B. o- und p-Toluolsulfonsäure-2-chlorethylester, Benzolsulfonsäure-2-chlorethyl-ester, Glykolbis-o-toluolsulfonat, Glykolbis-p-toluolsulfonat, Glykolbisbenzolsulfonat, 1,2-Dibromethan, 1,2-Dichlorethan oder Gemische davon.

Vorzugsweise erfolgt die Umsetzung in Tri-n-butylamin. Als Alkylierungsmittel werden vorzugsweise o- und p-Toluolsulfonsäure-2-chlorethyl-ester, Benzolsulfonsäure-2-chlorethylester, 1,2-Dibromethan oder Gemische davon verwendet.

Die Alkylierung erfolgt in der Regel bei Temperaturen im Bereich von 100 bis 230 °C, vorzugsweise bei 120 bis 200 °C.

Die Alkylierung kann in verschiedener Weise durchgeführt werden. Das Alkylierungsmittel kann vor der Reaktion bei Raumtemperatur oder nach dem Aufheizen auf die gewünschte Reaktionstemperatur zugegeben werden. Es kann auch während des Aufheizens bei einer mittleren Temperatur zugegeben werden.

Die Aufarbeitung des Reaktionsgemisches kann z.B. so erfolgen, daß man das gesamte Reaktionsgemisch bis zur Trockene einengt - vorzugsweise unter varmindertem Druck - und den festen Rückstand durch Ausrühren mit Wasser von Alkali- bzw. Ammoniumsalzen und anderen Verunreinigungen befreit. Das Verfahrensprodukt kann aber auch durch Filtrieren oder Absaugen isoliert werden, wobei das Reaktionsgemisch vorteilhafterweise vorher mit Wasser versetzt wird. In diesem Fall kann das basisch wirkende Alkalimetallsalz auch zusammen mit dem Wasser zum Reaktionsgemisch gegeben werden. Reste von anhaftendem Amin können durch Behandlung mit heißem Wasser, Dampf oder verdünnten Säuren, z.B. verdünnter Schwefelsäure, entfernt werden.

Die folgenden Ausführungsbeispiele sollen das erfindungsgemäße Verfahren zusätzlich erläutern.

Beispiel 1

In einem 6 l-Gefäß mit absteigendem Kühler werden 2 000 g Tributylamin, 240 g wasserfreie Soda und 500 g Dioxidibenzanthron unter einem schwachen Stickstoffstrom in einer Stunde auf 150 °C aufgeheizt und dabei übergehendes Destillat aufgefangen. Dann werden 700 g einer Mischung aus o- und p-Toluolsulfonsäure-2-chlorethylester zugetropft und danach die Temperatur langsam auf 180 bis 185 °C gesteigert, wobei wiederum übergehendes Destillat aufgefangen wird. Dann wird der Stickstoff abgestellt, der absteigende Kühler durch einen Rückflußkühler ersetzt und zwei Stunden bei 180/185 °C nachgerührt. Nach dem Abkühlen auf 80 °C läßt man 1,5 l Wasser zulaufen. Dann saugt man den Farbstoff ab, wäscht ihn mit heißem Wasser, 10 %iger Schwefelsäure und Wasser und trocknet.

Ausbeute: 568 g Farbstoff

Das gleiche Ergebnis wird erhalten, wenn statt 2 000 g Tributylamin 1 500 g oder 4 000 g Tributylamin verwendet werden.

Um nach den Verfahren des Standes der Technik (US-PS 1 950 366 und 3 036 095) eine Farbstoffmenge zu erhalten, die in ihrer Färbewirkung der nach dem obigen Verfahren erhaltenen Farbstoffmenge entspricht, müssen 530 bis 550 g Dioxidibenzanthron angewendet werden.

Beispiel 2

Man verfährt wie in Beispiel 1, verzichtet aber auf den Zusatz von Soda.
Ausbeute: 571 g Farbstoff

Beispiel 3

Man verfährt wie in Beispiel 1, setzt aber die Soda erst vor der Zugabe des Wassers zu.
Ausbeute: 573 g Farbstoff

Beispiel 4

Man verfährt wie in Beispiel 1, läßt das Reaktionsgemisch auf Raumtemperatur abkühlen und überführt es in einen Schaufeltrockner. Das Amin wird im Vakuum abdestilliert. Der trockene Rückstand wird in Wasser suspendiert und abgesaugt, das Filtergut mit 10 %iger Schwefelsäure und dann mit Wasser gewaschen.

Ausbeute: 571 g Farbstoff

Beispiel 5

In einen 6 l-Schaufeltrockner mit zuschaltbarem Rückflußkühler und absteigendem Kühler werden 500 g Dioxidibenzanthron, 240 g wasserfreie Soda und 2 000 g Tributylamin gefüllt. Man heizt mit absteigendem Kühler auf 150° C, tropft dann langsam 280 g einer Mischung aus o- und p-Toluol-sulfonsäure-2-chlorethylester zu, heizt anschließend weiter auf 180 bis 185° C und hält unter Rückflußkühlung zwei Stunden bei 180/185° C. Dann legt man bei absteigendem Kühler Vakuum an und hält bei dieser Temperatur, bis kein Lösungsmittel mehr übergeht. Der feste Rückstand wird in Wasser suspendiert und abgesaugt, mit 10 %iger Schwefelsäure und zuletzt mit Wasser gewaschen.

Ausbeute: 584 g Farbstoff

Das gleiche Ergebnis wird erhalten, wenn man die Soda erst vor Beginn der Vakuumdestillation zugibt oder ganz wegläßt.

Beispiel 6

Man verfährt wie in Beispiel 1, verwendet aber anstelle eines Gemisches von o- und p-Toluolsulfonsäure-2-chlorethylester 650 g Benzolsulfonsäure-2-chlorethylester.

Ausbeute: 570 g Farbstoff.

Beispiel 7

Man verfährt wie in Beispiel 1, verwendet aber anstelle von Tributylamin Triisobutylamin.

Ausbeute: 570 g Farbstoff

Beispiel 8

In einem 6 l-Gefäß mit absteigendem Kühler werden 2 000 g Tributylamin, 240 g wasserfreie Soda und 500 g Dioxidibenzanthron unter schwachem Stickstoffstrom in einer Stunde auf 150° C geheizt und übergehendes Destillat aufgefangen. Dann läßt man auf 120° C abkühlen und tropft bei dieser Temperatur 770 g 1,2-Dibromethan zu. Anschließend heizt man langsam auf 180/185° C, wobei übergehendes Destillat aufgefangen wird. Der Stickstoff wird abgestellt, der absteigende Kühler durch einen Rückflußkühler ersetzt und zwei Stunden bei 180/185° C nachgerührt. Danach kühlt man auf 80° C ab und läßt 2 l Wasser zulaufen, saugt den Farbstoff ab und wäscht ihn mit heißem Wasser, mit 10 %iger Schwefelsäure und mit Wasser nach. Nach dem Trocknen erhält man 565 g Farbstoff.

Beispiele 9 bis 12

Es wurde wie in Beispiel 1 verfahren, jedoch wurden anstelle von Tributylamin die in der Tabelle angegebenen Amine verwendet.

| Beispiel | tert. Amin | Ausbeute an Farbstoff |
|---|---|---|
| 9 | Tri-n-pentylamin | 572 g |
| 10 | Tri-n-hexylamin | 575 g |
| 11 | Tri-n-heptylamin | 580 g |
| 12 | Tri-n-octylamin | 580 g |

**Patentansprüche**

4

## EP 0 259 849 B1

1. Verfahren zur Herstellung von C.I. Vat Blue 16; C.I. No. 71200, durch Alkylierung von 16,17-Dihydroxiviolanthrendion-5,10 in einem polaren Lösungsmittel in der Wärme, dadurch gekennzeichnet, daß die Alkylierung in einem tertiären aliphatischen oder cycloaliphatischen Amin oder einem N-Alkylpiperidin als Lösungsmittel bei Temperaturen zwischen 100 und 230° C erfolgt.

2. Verfahren gemäß Anspruch 1, dadurch gekennzeichnet, daß die Alkylierung in Gegenwart von Alkalimetallsalzen von schwachen Säuren erfolgt.

3. Verfahren gemäß Anspruch 1 oder 2, dadurch gekennzeichnet, daß man als Alkylierungsmittel o-Toluolsulfonsäure-2-chlorethylester, p-Toluolsulfonsäure-2-chlorethylester, Benzolsulfonsäure-2-chlorethylester, 1,2-Dibromethan oder Gemische dieser Mittel verwendet.

4. Verfahren gemäß Anspruch 1, 2 oder 3, dadurch gekennzeichnet, daß man als Lösungsmittel Tri-n-butylamin verwendet.

## Claims

1. A process for the preparation of C.I. Vat Blue 16, C.I. no. 71200, by alkylating 16,17-dihydroxyviolanthrene-5,10-dione in a polar solvent at elevated temperatures, wherein the alkylation is carried out in a tertiary aliphatic or cycloaliphatic amine or an N-alkylpiperidine as the solvent at from 100 to 230° C.

2. A process as claimed in claim 1, wherein the alkylation is carried out in the presence of an alkali metal salt of a weak acid.

3. A process as claimed in claim 1 or 2, wherein 2-chloroethyl o-toluenesulfonate, 2-chloroethyl p-toluenesulfonate, 2-chloroethyl benzenesulfonate, 1,2-dibromoethane or a mixture of these agents is used as the alkylating agent.

4. A process as claimed in claim 1, 2 or 3, wherein tri-n-butylamine is used as the solvent.

## Revendications

1. Procédé de préparation de C.I, Vat Blue 16; C.I. No. 71200, par alkylation de 16,17-dihydroxyviolanthrènedione-5,10 dans un solvant polaire à la chaleur, caractérisé en ce que l'alkylation est effectuée dans une amine aliphatique ou cycloaliphatique tertiaire ou dans une N-alkylpipéridine en tant que solvant, à une température comprise entre 100 et 230° C.

2. Procédé selon la revendication 1, caractérisé en ce que l'alkylation est effectuée en présence de sels alcalins d'acides faibles.

3. Procédé selon la revendication 1 ou 2, caractérisé en ce qu'on utilise, comme agent d'alkylation, de l'ester 2-chloréthylique d'acide o-toluènesulfonique, de l'ester 2-chloréthylique d'acide p-toluènesulfonique, de l'ester 2-chloréthylique d'acide benzènesulfonique, du 1,2-dibromo-éthane ou des mélanges de ces agents.

4. Procédé selon l'une quelconque des revendications 1 à 3, caractérisé en ce qu'on utilise, comme solvant, de la tri-n-butylamine.